(19) Europäisches Patentamt
European Patent Office
Office européen des brevets

(11) **EP 1 923 477 B1**

(12) **EUROPEAN PATENT SPECIFICATION**

(45) Date of publication and mention
of the grant of the patent:
**24.07.2019 Bulletin 2019/30**

(51) Int Cl.:
***C22C 38/00*** (2006.01)      ***C22C 38/14*** (2006.01)
***C22C 38/54*** (2006.01)      ***C21D 8/10*** (2006.01)
***B60G 21/055*** (2006.01)     ***C22C 38/12*** (2006.01)

(21) Application number: **06796702.6**

(22) Date of filing: **17.08.2006**

(86) International application number:
**PCT/JP2006/316539**

(87) International publication number:
**WO 2007/023873 (01.03.2007 Gazette 2007/09)**

(54) **HIGHLY STRONG, THICK ELECTRIC RESISTANCE-WELDED STEEL PIPE EXCELLENT IN QUENCHING PROPERTY, HOT FORMING PROCESSABILITY AND FATIGUE STRENGTH, AND METHOD FOR MANUFACTURE THEREOF**

HOCHFESTES DICKES WIDERSTANDSGESCHWEISSTES STAHLROHR MIT HERVORRAGENDEN HÄRTEEIGENSCHAFTEN, WARMFORMUNGSVERARBEITBARKEIT UND ERMÜDUNGSFESTIGKEIT SOWIE HERSTELLUNGSVERFAHREN DAFÜR

TUYAU EN ACIER ÉPAIS ET TRÈS RÉSISTANT SOUDÉ PAR RÉSISTANCE ÉLECTRIQUE PRÉSENTANT D'EXCELLENTES PROPRIÉTÉS DE TREMPE ET DE RÉSISTANCE À LA FATIGUE AINSI QU'UNE EXCELLENTE APTITUDE AU TRAITEMENT DE FORMAGE À CHAUD, ET SON PROCÉDÉ

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.08.2005  JP 2005239953
22.08.2005  JP 2005240130**

(43) Date of publication of application:
**21.05.2008  Bulletin 2008/21**

(73) Proprietor: **Nippon Steel Corporation
Tokyo (JP)**

(72) Inventors:
• **ISHITSUKA, Tetsuo**
  **Chiyoda-ku**
  **Tokyo (JP)**
• **MIMURA, Hiroyuki**
  **Chiyoda-ku**
  **Tokyo (JP)**
• **KOYUBA, Motofumi**
  **Chiyoda-ku**
  **Tokyo (JP)**
• **TAKASUGI, Naoki**
  **Chiyoda-ku**
  **Tokyo (JP)**
• **ICHIYAMA, Takahiro**
  **Chiyoda-ku**
  **Tokyo (JP)**

(74) Representative: **Vossius & Partner
Patentanwälte Rechtsanwälte mbB
Siebertstrasse 3
81675 München (DE)**

(56) References cited:
JP-A- H 108 205      JP-A- 05 302 119
JP-A- 58 123 858     JP-A- 2004 009 126
JP-A- 2004 011 009   JP-A- 2004 353 028
JP-A- 2005 076 047   JP-A- 2005 139 517

**Description**

The present invention relates to high strength thick-gauge electric-resistance welded steel pipe excellent in hardenability, hot workability, and fatigue strength suitable for a hollow stabilizer for securing running stability of an automobile and method of production of the same.

As one measure for improvement of the fuel economy of automobiles, the chasses of automobiles are being reduced in weight. The stabilizer easing the rolling of the chassis at the time of cornering of the automobile and securing stability of the chassis at the time of high speed running may be mentioned as being part of this. In the past, stabilizers have been produced by working a steel bar or other solid material into the required shape, but to lighten the weight, they are increasingly being produced using seamless steel pipe, electric-resistance welded steel pipe, or other hollow members.

As electric-resistance welded steel pipe for a stabilizer, WO2002/070767 discloses electric-resistance welded steel pipe for a stabilizer restricted in composition so as to obtain a uniform metal structure of the electric-resistance welded part and matrix material part, a small difference in hardness between the electric-resistance welded part and matrix material part, and excellent workability. Further, JP 2004-011009A discloses electric-resistance welded steel pipe for a hollow stabilizer limiting the contents of Ti and N to secure hardenability.

JP 2004-009126A proposes electric-resistance welded steel pipe for a hollow stabilizer having a ratio t/D of the thickness t and outside diameter D of the steel pipe of 20% or more and a tensile strength of 400 to 755 N/mm$^2$ and discloses to increase the thickness by stretch reducing rolling.

Further, JP 2003-201543A proposes high strength steel pipe for an automobile structural member obtained by stretch rolling a material pipe, having a tensile strength of over 580 MPa, having a yield ratio of 70% or less, and excellent in workability to withstand hydroforming, while Japanese JP 2004-292922A proposes a method of production of high tension steel pipe specifying the heating temperature, diameter reduction rate, etc. at the time of stretch rolling to obtain superior bending, stretching, pipe end flattening, and other composite secondary workability.

Further, JP 2005-076047A discloses a method of production of a hollow stabilizer forming a material pipe into a stabilizer shape by cold bending, quenching this shaped steel pipe, and heat treating it for tempering, which method of production of a hollow stabilizer rolls said material pipe at a rolling temperature 600 to 850°C and a cumulative diameter reduction rate of 40% or more after heat treating the master steel pipe so as to improve the fatigue resistance characteristics.

Further, JP 3,653,871B discloses electric-resistance welded steel pipe for quenching use containing, by mass%, C: 0.15 to 0.3%, Mn: 0.5 to 2.0%, and Cu: 0.05 to 0.30%, one or more elements selected from Si<0.41%, P≤0.020, Al≤0.03%, Nb≤0.020%, B≤0.001%, Ti≤0.01%, and Cr≤0.42%, unavoidable impurities limited to 0≤Ni+Mo<0.15% and S≤0.003%, and the balance of Fe to give excellent workability and a high residual strength rate after penetration of water due to corrosion.

However, for example, a stabilizer is produced by further stretch rolling electric-resistance welded steel pipe to obtain thick-gauge electric-resistance welded steel pipe having the required thickness/outside diameter ratio and then 1) forming it into the required shape by bending or other cold forming, heating and water cooling this for quenching, then tempering it or 2) heating the thick-gauge electric-resistance welded steel pipe, forming it to the required shape by pressing or other hot forming, then water cooling it for quenching, then tempering it. The latter method of hot forming is superior compared with the former cold forming in that the forming work is easier and even complicated shapes can be handled, so this is advantageous as a production process.

However, with this method, the material is shaped after heating, so the time until quenching becomes long - leading to a drop in the temperature of the formed member, contact between the press die and the master steel pipe (electric-resistance welded steel pipe) causes a drop in temperature, and the formation of heating scale causes uneven temperature, so it becomes difficult to secure a sufficient hardened state overall and insufficient hardening is liable to occur. A steel material for steel pipe better in hardenability is therefore necessary. For this reason, the general practice is to use B-containing steel having a high hardenability for the stabilizer steel, but B-containing steel has the major problems that it is poor in hot workability and is susceptible to cracking and flaws at the time of hot forming. Further, B-containing steel sometimes falls in fatigue strength - an important characteristic for a stabilizer.

Further, the trend toward reduction of the weight of automobile chasses is accelerating. Further higher strength electric-resistance welded steel pipe for stabilizers is being sought.

JP 2004-353028A discloses a high carbon steel tube excellent cold forging workability and rolling workability and its production method.

JP 2005 139517A discloses a method for producing a high strength and high toughness thick plate.

The stabilizer use electric-resistance welded steel pipes and high strength steel pipes described in WO2002/070767, JP 2004-011009A, JP 2004-009126A, JP 2003-201543A, JP 2004-292922A, JP 2005-076047A, JP 3653871B, etc. are useful as steel pipe for automobile structural members, but, as explained above, cannot sufficiently handle the problems arising from changes in the process in the method of production of automobile structural members.

Further, they cannot be said to be sufficient in terms of fatigue characteristics either.

The present invention, in consideration of the above problems, has as its object the provision of high strength thick-gauge electric-resistance welded steel pipe having sufficient hardenability and excellent in hot workability and fatigue strength and a method of production of the same.

The thick-gauge electric-resistance welded steel pipe of the present invention was devised to achieve this object. It increases the C as much as possible to improve the strength (hardness) to an extent not impairing the weldability and toughness, strictly limits the range of the N content to improve the hot workability and fatigue strength, and adjusts the composition of the steel material so that the critical cooling rate Vc becomes a specific range so as to thereby secure the hardenability. Further, in the production of the thick-gauge electric-resistance welded steel pipe of the present invention, the heating temperature and the cross-section reduction rate are set to specific ranges for the stretch reducing rolling of the electric-resistance welded steel pipe.

Thus, the object can be achieved by the features defined in the claims.

The thick-gauge electric-resistance welded steel pipe of the present invention is extremely excellent in hardenability, so in the production of a stabilizer or other automobile structural member, for example, it is possible to obtain a sufficient hardening effect immediately after hot forming. Further, the quenching means is not limited to water cooling. It is also possible to obtain a sufficient hardening effect by oil quenching which has a smaller cooling rate than water cooling.

Further, since the hot workability is excellent, cracks or flaws are difficult to occur even with hot forming when producing automobile members. In addition, the fatigue strength is excellent, so there is high durability against repeated load. Further, the strength is high, so the stabilizers and other automobile structural members may be lightened in weight more.

BRIEF DESCRIPTION OF THE DRAWINGS

FIG. 1 is a view of the relationship between hardness of a steel material for thick-gauge electric-resistance welded steel pipe after quenching and tempering and the amount of C.
FIG. 2 is a view of the relationship between the reduction in area at 850°C and the N content.
FIG. 3 is view for explaining the method of the fatigue test.

BEST MODE FOR WORKING THE INVENTION

The inventors investigated to improve the hardenability, hot workability, and fatigue strength of thick-gauge electric-resistance welded steel pipe for a stabilizer and further to increase the strength thereof.

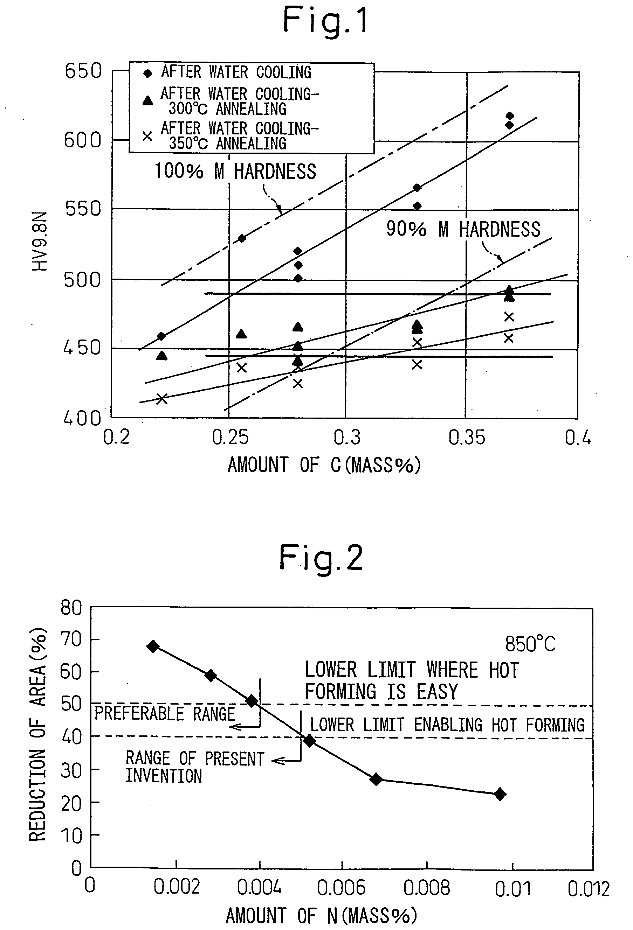

First, the inventors studied the strength and investigated the hardness after water-cooled quenching and tempering for steel materials for electric-resistance welded steel pipe (Test Materials A, B, C) and comparative steel materials (Conventional Materials A, B) of the compositions shown in Table 1 changed in amounts of C. FIG. 1 shows the relationship between the change in hardness after water-cooled quenching and tempering and the amount of C.

As will be understood from FIG. 1, due to the increase in the amount of C, the hardness increases and for example rises by about 10% or more from the hardness level of the conventional materials and the strength increases. Note that the effect becomes remarkable if C: 0.25% or more.

Table 1 (mass%)

|  | C | Si | Mn | Cr | Mo | B | N | Ti |
|---|---|---|---|---|---|---|---|---|
| Conventional material A | 0.22 | 0.20 | 0.55 | 0.35 | - | 0.0015 | 0.0050 | 0.015 |
| Conventional material B | 0.26 | 0.20 | 0.83 | 0.36 | 0.15 | 0.0016 | 0.0038 | 0.016 |
| Test Material A | 0.28 | 0.25 | 0.80 to 1.1 | 0 to 0.35 | 0.15 to 0.30 | 0.0011 | 0.004 | 0.014 |
| Test Material B | 0.33 | Same as above | Same as above | Same as above | Same as above | Same as above | Same as above | 0.015 |
| Test Material C | 0.37 | Same as above | Same as above | 0.15 to 0.30 | Same as above | Same as above | Same as above | 0.015 |

Next, the inventors studied the hardenability.

FIG. 1 simultaneously shows the relationship between the hardnesses of 100% and 90% martensite structures and the amount of C. From Test Materials A, B, and C, it is learned that if hardening to at least a 90% martensite structure, a hardness of 10% or more of the conventional material can be secured. Therefore, as an indicator of the hardenability, for example, it is sufficient to use the critical cooling rate Vc (°C/sec) giving a 90% martensite structure known in the past from Tetsu to Hagane, 74 (1988), p. 1073. This is usually expressed by the following equation <1>:

$$logVc=2.94-0.75\beta \quad \cdots <1>$$

where $\beta=2.7C+0.4Si+Mn$, or
$\beta=2.7C+0.4Si+Mn+0.45Ni+0.8Cr+2Mo$.

From FIG. 1, it is clear that with water quenching, a 90% or higher martensite structure is obtained, but oil quenching has a much smaller cooling rate than water quenching. Usually, the cooling rate reached when oil quenching steel pipe of a size used for a stabilizer is 30°C/s. Therefore, to secure a 90% martensite structure even with oil quenching, in the present invention, the critical cooling rate Vc is made less than 30°C/sec.

As explained above, to improve the strength of the material steel pipe, the amount of C is increased and the ingredients are selected so that the critical cooling rate Vc shown in <1> becomes less than 30°C/sec.

Next, the inventors studied the methods for improving the hot workability and fatigue strength.

The inventors investigated the causes for the poor workability of the B-containing steel in the 600 to 900°C temperature region where hot forming is performed and as a result found the fact that the amount of N in the steel has a major effect on the hot deformation resistance. That is, the inventors fabricated test materials comprised of 0.3C-1.1Mn-0.020Ti-0.0013B steel changed in N content from 0.01% to 0.001% in range, conducted single-axis tensile tests at 850°C within the temperature range of hot forming, and measured the reduction in area at that time.

FIG. 2 shows the relationship between the reduction of area at 850°C and the N content.

As will be understood from FIG. 2, the smaller the content of N, the larger the reduction of area, that is, the better the hot workability. If the content of N falls to 0.005%, the reduction of area rises to 40%, the line where hot forming generally becomes possible, while if the content of N is less than 0.004%, the reduction of area reaches 50% or more where hot forming can be performed without problem. The inventors discovered that the reason was that due to the N content falling, the amount of TiN precipitating in the temperature region for hot forming falls. That is, in general, B-containing steel must contain Ti with its high effect of immobilizing N so as to suppress the precipitation of BN reducing the effect of B in improving the hardenability. Due to this, with B-containing steel, the inventors found that the hot workability was poor since TiN precipitated in the hot forming temperature region.

Further, the inventors discovered that massive precipitation of TiN causes a drop in the fatigue strength - an important characteristic of a stabilizer. Further, massive precipitation of TiN is also disadvantageous for toughness. On the other hand, due to the suitable presence of TiN, the growth of γ grains is suppressed and improvement of toughness is contributed to. Therefore, by strictly controlling the N content, which had not been that strictly controlled in the past, it becomes possible to obtain B-containing steel with desirable hot workability, fatigue strength, and toughness.

In this way, the thick-gauge electric-resistance welded steel pipe of the present invention is raised in C content and suppressed in N content to a small amount so as to improve the strength and improve the hot workability and fatigue strength and is suitably controlled in other ingredients so as to lower the critical cooling rate Vc and improve the hardenability.

Below, the chemical ingredients of the thick-gauge electric-resistance welded steel pipe of the present invention will be explained.

C is an element entering into solid solution or precipitating in a base material and increasing the strength of the steel.

Automobile structural members higher in strength than before have to have a 90% martensite structure and a hardness of Hv400, so C has to be contained in an amount of 0.25% or more, but if contained over 0.4%, the workability and the weldability deteriorate, so the content is made 0.25 to 0.4% in range.

Si is an alloy element contributing to solution strengthening. To obtain this effect, 0.01% or more must be contained. Further, there is the effect of increasing the tempering softening resistance. To obtain this effect, 0.25% or more must be added. On the one hand, if added over 0.5%, the toughness falls. Therefore, the content is made 0.01 to 0.50% in range. Note that preferably the content is 0.25 to 0.35%.

Mn is an element for increasing the hardenability. If the content is less than 0.8%, the effect of increasing the hardenability cannot be sufficiently secured, while if over 1.5%, the weldability and weld zone soundness are detrimentally affected, so the content is made 0.8 to 1.5% in range.

Al is an element required as a deoxidation material for molten steel. Further, it is an element for immobilizing N. Therefore, the amount has a major effect on the crystal grain size or the mechanical properties. If the content is over 0.05%, the crystal grain size coarsens and the toughness drops, the nonmetallic inclusions increase, and flaws easily occur on the product surface, so the content is made 0.05% or less. Note that preferably the content is 0.03% or less.

B is an element which, when added in a fine amount, greatly improves the hardenability.of the steel material. Further, there is the effect of grain boundary strengthening. If the content is less than 0.0005%, it is not possible to expect the effect of improving the hardenability. On the one hand, if over 0.01%, coarse B-containing phases tend to be produced and embrittlement easily occurs. Therefore, the content is made 0.0005% to 0.0020%. Note that preferably the content is over 0.0010 to 0.0020%.

N is an element having the effects of causing the precipitation of nitrides or carbonitrides and increasing the strength. However, in B-containing steel, the drop in hardenability due to the precipitation of BN, as explained above, the drop in the hot workability and fatigue strength due to the precipitation of TiN due to the Ti added to prevent the precipitation of BN, and further the drop in toughness become problems. On the other hand, TiN has the effect of suppressing coarsening of the $\gamma$ grains at the time of high temperature and increasing the toughness. For this reason, to optimize the balance of the hot workability, fatigue strength, and toughness, the content is made 0.001 to less than 0.004% in range. Note that preferably the content is 0.002 to less than 0.004%.

Ti acts to immobilize the N in the steel as TiN and suppress the precipitation of BN so as to stably and effectively improve the hardenability by the addition of B. Therefore, addition in an amount of 3.42 times the N content is necessary at the minimum as in the stoichiochemical level of TiN. The range of the Ti content is automatically determined from the above range of N content. However, there is also the amount precipitating as carbides, so to more reliably immobilize the N, the content is made higher than the theoretical value of 0.005% or more, while if over 0.05%, the toughness tends to deteriorate, so the upper is made 0.02%. Note that preferably the content is 0.01 to 0.02%.

P is an element having a detrimental effect on the weld crack resistance and toughness, so is limited to not more than 0.05%. Note that preferably the content is 0.03% or less.

S has an effect on the formation of nonmetallic inclusions in a steel material, degrades the bendability, flattenability, and other workability of steel pipe, and becomes a cause of deterioration of increase of toughness and an increase in anisotropy and reheating crack susceptibility. Further, this also has a detrimental effect on the soundness of the weld zone. Therefore, the content is limited to 0.05% or less. Note that preferably the content is 0.01% or less.

The thick-gauge electric-resistance welded steel pipe of the present invention contains Ca and in accordance with need, one or more of Cr, Mo, V, Ni and Nb.

Cr is an element improving the hardenability. Further, it has the effect of causing the precipitation of $M_{23}C_6$ type carbides in the base material and has the action of increasing the strength and increasing the fineness of the carbides. If the content is less than 0.1%, these actions and effects cannot be sufficiently expected. Further, if over 1%, defects easily occur at the time of electric-resistance welding. Therefore, the content is made 0.1 to 1% in range. Note that preferably the content is 0.1 to 0.6%.

Mo is an element having the effect of improving the hardenability and has the effect of causing solution strengthening. If the content is less than 0.05%, these effects cannot be sufficiently expected. On the one hand, if over 1%, coarse carbides easily precipitate and the toughness is deteriorated, so the content is made 0.05 to 1% in range. Note that preferably the content is 0.1 to 0.5%.

Ni is an element having the effect of improving the hardenability and toughness. If the content is less than 0.1%, this effect cannot be expected, while if over 1%, there is a possibility of residual $\gamma$ even after quenching and the fatigue durability is degraded. Therefore, the content is made 0.1 to 1% in range. Note that preferably the content is 0.015 to 0.5%.

V is an element having the effect of improving the hardenability and has the effect of precipitation strengthening by the V carbonitrides. If the content is less than 0.01%, these effects cannot be sufficiently expected, while if over 0.5%, coarse carbides easily precipitate and the toughness is degraded, so the content is made 0.01 to 0.5% in range. Note that preferably the content is 0.02 to 0.05%.

Nb has the effect of precipitation strengthening by Nb carbonitrides and further has the effect of increasing the fineness of the former austenite grains and increasing the toughness. Further, there is the effect of suppression of the decarbrization of the surface.

If the content is less than 0.01%, the effect of improvement of the strength and toughness is not sufficient, while if contained over 0.1%, the carbides increase and the toughness drops. Therefore, the content is made 0.01 to 0.1% in range. Note that preferably the content is 0.02 to 0.04%.

Ca is an element having the effect of making the oxides and sulfides spherical in shape and improving the workability. If the content is less than 0.0002%, these effects cannot be sufficiently expected, while if over 0.005%, the oxides in the steel increase and the toughness is degraded, so the content is made 0.0002 to 0.005% in range. Note that preferably the content is 0.0002 to 0.004%.

Next, the reason for making the ratio of the thickness t (mm) of the steel pipe and the outside diameter D (mm) of the steel pipe, that is, t/D, is made a range of over 0.15 to 0.30 in the thick-gauge electric-resistance welded steel pipe of the present invention will be explained.

To lighten the weight of the stabilizer, the smaller the t/D the better. However, the smaller the t/D, the greater the main stress applied at the time of use, so the more the fatigue characteristics drop. On the other hand, if the t/D becomes larger, the effect of reducing the weight becomes smaller. In addition, production of electric-resistance welded steel pipe becomes difficult. To secure the minimum extent of the fatigue strength, the lower limit of t/D is set to over 0.15, while from the viewpoint of the producibility and reduction of weight, the upper limit is set to 0.30.

The method of production of the thick-gauge electric-resistance welded steel pipe of the present invention will be explained.

Molten steel produced to have the required chemical composition is cast to a slab or is formed into an ingot once, then is hot rolled to a slab. This cast or rolled slab is then hot rolled to obtain a hot rolled steel sheet.

This hot rolled steel sheet is formed into an electric-resistance welded steel pipe by the method of production of ordinary electric-resistance welded steel pipe, for example, hot or cold electric-resistance welding.

The thick-gauge electric-resistance welded steel pipe of the present invention has a ratio of thickness/outside diameter of the steel pipe explained above, that is, t/D, of over 0.15 to 0.30. When the electric-resistance welded steel pipe making machine has the ability to produce electric-resistance welded steel pipe having such a range of thickness/outside diameter ratio, it is possible to use the hot rolled steel sheet to directly produce the thick-gauge electric-resistance welded steel pipe of the present invention.

However, the greater the thickness in electric-resistance welded steel pipe, the smaller the outside diameter of the pipe, and the higher the strength of the steel material of the steel pipe, the harder the production. In general, an electric-resistance welded steel pipe having a thickness/outside diameter ratio t/D of 0.15 or less can be produced by an ordinary electric-resistance welded steel pipe making machine, but if the t/D is over 0.15, the production capacity is exceeded, so with an ordinary electric-resistance welded steel pipe making machine, it is often difficult to directly produce a thick-gauge electric-resistance welded steel pipe of the present invention having a t/D of over 0.15 to 0.30.

Therefore, an ordinary electric-resistance welded steel pipe making machine is used to produce electric-resistance welded steel pipe having a thickness/outside diameter ratio of 0.15 or less (also called a "master pipe" here), then this is hot stretch rolled to produce thick-gauge electric-resistance welded steel pipe having a thickness/outside diameter ratio of over 0.15 to 0.30.

The stretch reducing rolling may be performed using a stretch reducer etc.

A stretch reducer is a rolling mill provided with a plurality of rolling stands having three or four rolls around a rolling axis in series along the rolling axis. By adjusting the roll speeds and rolling forces of the rolling stands of this rolling mill, it is possible to control the tension in the axial direction of the steel pipe (rolling direction) and the compression force in the circumferential direction and thereby increase the thickness/outside diameter ratio in stretch reducing rolling.

That is, in the stretch reducing rolling, the steel pipe is reduced in outside diameter by the reduction force on the outside diameter, while the thickness is increased. On the other hand, the thickness is reduced due to the tension acting on the axial direction of the steel pipe. The final thickness is determined by the balance of the two. The thickness of the thus stretch reducing rolled steel pipe is mainly determined by the tension between the rolling stands, so it is necessary to find the tension between rolling stands for obtaining the target thickness from rolling theory etc. and set the roll speeds of the rolling stands on which this tension acts.

As explained above, the present invention heats said electric-resistance welded steel pipe (master pipe) to 800 to 1200°C and cross-section reduction rate 40 to 80% and hot stretch rolls it to obtain thick-gauge electric-resistance welded steel pipe having a thickness/outside diameter ratio of over 0.15 to 0.30.

Here, the "cross-section reduction rate" is the (outside diameter of the steel pipe before stretch reducing - outside diameter of the steel pipe after stretch reducing)/outside diameter of steel pipe before stretch reducing $\times$ 100 (%).

If the heating temperature of the electric-resistance welded steel pipe at the time of stretch reducing rolling is less than 800°C, the deformation resistance is large, while if over 1200°C, there is remarkable formation of heat scale and the surface properties deteriorate. Therefore, the heating temperature is made 800 to 1200°C in range.

Further, if the cross-section reduction rate at the time of stretch reducing rolling is less than 40%, the compression force is insufficient. It is therefore difficult to make thick-gauge electric-resistance welded steel pipe having a thickness/outside diameter ratio of over 0.15 to 0.30 from electric-resistance welded steel pipe (master pipe) having a thickness/outside diameter ratio of 0.15 or less. On the other hand, if the cross-section reduction rate is over 80%, there is remarkable formation of surface defects on the steel pipe due to stretch reducing rolling and securing a uniform surface becomes difficult. Therefore, the cross-section reduction rate in the stretch reducing rolling is made 40 to 80%.

Note that whether the thick-gauge electric-resistance welded steel pipe of the present invention was produced by stretch rolling can be judged by observation of the angularity of the inside surface of the cross-section vertical to the pipe axial direction (C section) or by measurement of thickness.

For example, the stretch reducer used for the stretch reducing rolling, as explained above, is a rolling mill provided with a plurality of rolling stands having three rolls or four rolls around the rolling axis in series along the rolling axis. Normally, the rolls of the adjoining rolling stands (for example, the N and N+1 rolling stands) are offset in phase.

In the case of three-roll rolling stands, the rolls are arranged offset in phase by exactly 60° while in the case of four-roll rolling stands, the rolls are arranged offset in phase by exactly 45°.

Therefore, the inside shape of the cross-section vertical to the axial direction of the thick-gauge electric-resistance welded steel pipe produced by stretch reducing rolling (C section) is hexagonal when the stretch reducer is provided with three-roll rolling stands and is octagonal when it is provided with four-roll rolling stands.

Further, when the phase of the rolls in four continuous rolling stands of a stretch reducer (for example, N, N+1, N+2, and N+3 rolling stands) are offset by 30°, 60°, and 90° in the case of three-roll rolling stands and offset by 22.5°, 45°, and 67.5° in the case of four-roll rolling stands, the inner shape of the cross-section vertical to the axial direction of the thick-gauge electric-resistance welded steel pipe after stretch rolling (C section) is dodecagonal in the case of provision of three-roll rolling stands and hexadecagonal in the case of four-roll rolling stands.

In this way, it is learned that when the inner shape of the cross-section vertical to the axial direction of the thick-gauge electric-resistance welded steel pipe is formed in such a polygonal shape, this thick-gauge electric-resistance welded steel pipe was produced by stretch reducing rolling.

EXAMPLES

Various steels having the compositions shown in Table 2 were melted and cast into slabs. Each slab was heated to 1150°C and hot rolled at a rolling finish temperature of 890°C and a coiling temperature of 630°C to obtain steel sheet having a sheet thickness of 6 mm. This hot rolled steel sheet was slit to predetermined widths and welded by high frequency electric-resistance welding to obtain electric-resistance welded steel pipe (master pipe) with an outside diameter of 90 mm. Next, high frequency induction heating was used to heat this steel pipe to 980°C, then this was stretch reducing rolled to obtain thick-gauge electric-resistance welded steel pipe having a thickness of 7 mm and an outside diameter of 35 mm.

Further, the electric-resistance welded steel pipe produced by the Steel No. 1 of Table 2 was changed in cross-section reduction rate in the stretch reducing rolling to produce thick-gauge electric-resistance welded steel pipe having a thickness of 5 to 7.5 mm and an outside diameter 30 to 35 mm.

The obtained thick-gauge electric-resistance welded steel pipe was heated to 960°C, water cooled, quenched, and tempered at 300°C×1 hr and 350°C×1 hr. Test pieces were taken from this steel pipe and subjected to various types of tests so as to confirm the chararacteristics of the thick-gauge electric-resistance welded steel pipe of the present invention.

The hardness was obtained by measuring the center of thickness by Hv9.8N at five points and finding the average.

The hot workability was evaluated using a single-axis tensile test piece having a diameter of the parallel part of 6 mm, applying tension at 850°C, and finding the rate of reduction of the cross-sectional area of the broken part.

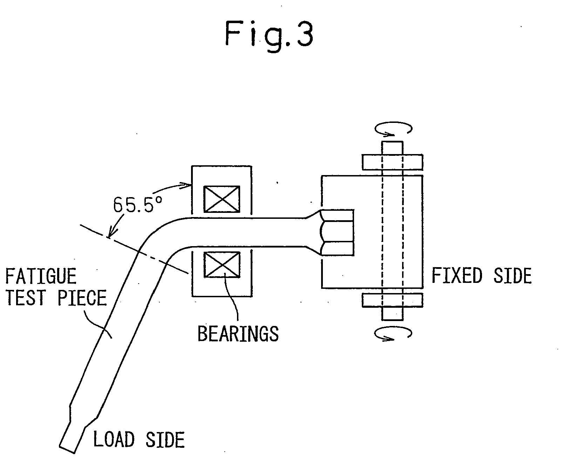

Further, for the fatigue characteristics, the method of Bane Ronbunshu (Springs Papers), 28 (1983), p. 46 was used to obtain a fatigue test piece bent by a bending radius of 60 mm shown in FIG. 3. One end was fixed. A double flexure fatigue test was conducted under stress conditions giving a primary stress amplitude of 600 MPa by a solid material of the same diameter to find the cycles until break.

The results of these characteristics are shown in Table 2 and Table 3.

Table 2

| | No. | Chemical composition (mass%) | | | | | | | | | | | | | | | Vc (°C/sec) | Hv9.8N | Reduction of area at 850°C (%) | Cycles until break (×10³) |
|---|---|---|---|---|---|---|---|---|---|---|---|---|---|---|---|---|---|---|---|---|
| | | C | Si | Mn | P | S | Ni | Cr | Mo | Nb | V | Ca | Ti | Al | N | B | | | | |
| Ref. ex. | 1 | 0.30 | 0.25 | 1.30 | 0.015 | 0.003 | | | | | | | 0.015 | 0.03 | 0.0035 | 0.0014 | 19.2 | 452 | 53 | 95 |
| | 2 | 0.28 | 0.25 | 1.10 | 0.015 | 0.004 | | | | | | | 0.015 | 0.03 | 0.0036 | 0.0011 | 29.7 | 448 | 53 | 94 |
| | 3 | 0.30 | 0.25 | 1.30 | 0.015 | 0.003 | 0.30 | | | | | | 0.015 | 0.03 | 0.0035 | 0.0014 | 15.2 | 455 | 55 | 95 |
| | 4 | 0.30 | 0.25 | 1.30 | 0.015 | 0.003 | | 0.50 | | 0.03 | | | 0.015 | 0.03 | 0.0036 | 0.0014 | 9.6 | 451 | 55 | 95 |
| | 5 | 0.30 | 0.25 | 1.30 | 0.015 | 0.003 | | | 0.20 | | | | 0.015 | 0.03 | 0.0035 | 0.0014 | 9.6 | 458 | 53 | 95 |
| Inv. ex. | 6 | 0.30 | 0.25 | 1.30 | 0.015 | 0.003 | 0.10 | 0.20 | | | | 0.0016 | 0.015 | 0.03 | 0.0035 | 0.0014 | 13.5 | 451 | 53 | 94 |
| Ref. ex. | 7 | 0.30 | 0.25 | 1.30 | 0.015 | 0.003 | | | | | 0.04 | | 0.015 | 0.03 | 0.0035 | 0.0014 | 19.2 | 448 | 54 | 95 |
| Inv. Ex. | 8 | 0.28 | 0.25 | 1.10 | 0.015 | 0.004 | | 0.20 | 0.15 | 0.05 | | 0.0032 | 0.015 | 0.03 | 0.0036 | 0.0011 | 13.4 | 446 | 53 | 95 |
| | 9 | 0.30 | 0.01 | 1.30 | 0.015 | 0.004 | | | | | | 0.0008 | 0.015 | 0.03 | 0.0023 | 0.0011 | 22.6 | 457 | 62 | 102 |
| | 10 | 0.30 | 0.35 | 1.30 | 0.015 | 0.004 | | | | | | 0.0008 | 0.015 | 0.03 | 0.0023 | 0.0011 | 17.9 | 458 | 62 | 101 |
| | 11 | 0.30 | 0.50 | 1.30 | 0.015 | 0.004 | | | | | | 0.0008 | 0.015 | 0.03 | 0.0023 | 0.0011 | 16.1 | 460 | 61 | 101 |
| Comp. ex. | 12 | 0.22 | 0.20 | 0.55 | 0.015 | 0.003 | | 0.35 | | | | | 0.015 | 0.03 | 0.0048 | 0.0015 | 64.9 | 384 | 43 | 82 |
| | 13 | 0.26 | 0.20 | 0.83 | 0.015 | 0.004 | | 0.36 | 0.15 | | | | 0.015 | 0.03 | 0.0054 | 0.0012 | 19.5 | 451 | 37 | 76 |
| | 14 | 0.12 | 0.25 | 2.00 | 0.015 | 0.003 | | | | | | | 0.015 | 0.03 | 0.0035 | 0.0015 | 13.2 | 296 | 53 | 93 |

EP 1 923 477 B1

Table 3

|  | No. | Outside diameter (mm) | Thickness (mm) | Cross-section reduction rate (%) | t/D | Cycles until break ($\times 10^3$) |
|---|---|---|---|---|---|---|
| Ref. ex. | a | 30 | 7.0 | 68.1 | 0.23 | 138 |
|  | b | 30 | 7.5 | 66.5 | 0.25 | 141 |
|  | c | 35 | 7.5 | 59.1 | 0.21 | 103 |
|  | d | 35 | 7.0 | 61.1 | 0.20 | 95 |
|  | e | 35 | 6.0 | 65.5 | 0.17 | 63 |
| Comp. ex. | f | 35 | 5.0 | 70.2 | 0.14 | 43 |

Steel Nos. 6 and 8 to 11 shown in Table 2 and having the chemical ingredients of the present invention had excellent characteristics of hardness, hot workability, and fatigue strength.

As opposed to this, Steel No. 12 had a large critical cooling rate Vc, so was not sufficiently hardened and had an amount of C of a low 0.22%, so did not give sufficient hardness. Steel No. 13 had too high an amount of N, so was poor in hot workability and also somewhat low in fatigue characteristics. Steel No. 14 had an insufficient amount of C, so even with tempering at 300°C, the minimum necessary hardness required for an automobile structural member could not be obtained.

The Steel Pipe Nos. a to e shown in Table 3 had sufficient fatigue strengths having sufficient cycles until break of over $50 \times 10^3$.

As opposed to this, the Steel Pipe No. f was an example where t/D was too small and sufficient fatigue strength could not be obtained

## Claims

1. High strength thick-gauge electric-resistance welded steel pipe excellent in hardenability, hot workability, and fatigue strength containing, by mass%,
   C: 0.25 to 0.4%,
   Si: 0.01 to 0.50%,
   Mn: 0.8 to 1.5%,
   P: 0.05% or less,
   S: 0.05% or less,
   Al: 0.05% or less,
   Ti: 0.005 to 0.02%,
   B: 0.0005 to 0.0020 %, N: 0.001 to less than 0.004%,
   Ca: 0.0002 to 0.005%, and optionally one or more selected from the group of Cr: 0.1 to 1%,
   Mo: 0.05 to 1%,
   V: 0.01 to 0.5%,
   Ni: 0.1 to 1%, and
   Nb: 0.01 to 0.1%,
   with a balance of Fe and unavoidable impurities, having a critical cooling rate Vc expressed by equation <1> of less than 30 deg. C/s, and having a ratio of thickness t and outside diameter D, t/D, of over 0.15 to 0.30 in range:

$$\text{LogVc} = 2.94 - 0.75\beta \qquad <1>,$$

   where $\beta = 2.7C + 0.4Si + Mn + 0.45Ni + 0.8Cr + 2Mo$.

2. A method of production of high strength thick-gauge electric-resistance welded steel pipe excellent in hardenability, hot workability, and fatigue strength **characterized by** heating a master electric-resistance welded steel pipe having the ingredients as set forth in claim 1 to 800 to 1200°C and stretch reducing rolling it by a cross-section reduction rate of 40 to 80% in range.

**Patentansprüche**

1. Hochfestes dickes widerstandsgeschweißtes Stahlrohr mit hervorragender Härtbarkeit, Warmverarbeitbarkeit und Ermüdungsfestigkeit, enthaltend in Masseprozent:

   C: 0,25 bis 0,4 %
   Si: 0,01 bis 0,50 %
   Mn: 0,8 bis 1,5 %
   P: 0,05 % oder weniger,
   S: 0,05 % oder weniger,
   Al: 0,05 % oder weniger,
   Ti: 0,005 bis 0,02 %,
   B: 0,0005 bis 0,0020 %
   N: 0,001 bis weniger als 0,004 %,
   Ca: 0,0002 bis 0,005 %, optional ein Element oder mehrere Elemente ausgewählt aus der Gruppe von:

   Cr: 0,1 bis 1 %
   Mo: 0,05 bis 1 %
   V: 0,01 bis 0,5 %
   Ni: 0,1 bis 1 % und
   Nb: 0,01 bis 0,1 %

   mit einem Rest von Fe und unvermeidlichen Verunreinigungen, mit einer durch Gleichung [1] ausgedrückten kritischen Abkühlrate Vc von weniger als 30 °C/s und einem Verhältnis von Dicke t zum Außendurchmesser D, t/D, im Bereich von über 0,15 bis 0,30:

$$\mathrm{LogVc} = 2{,}94 - 0{,}75\beta \qquad\qquad [1],$$

   wobei β = 2,7 C + 0,4 Si + Mn + 0,45 Ni + 0,8 Cr + 2 Mo.

2. Verfahren zur Herstellung eines hochfesten dicken widerstandsgeschweißten Stahlrohrs mit hervorragender Härtbarkeit, Warmverarbeitbarkeit und Ermüdungsfestigkeit, **gekennzeichnet durch** Erwärmen eines widerstandsgeschweißten Ausgangsstahlrohrs mit den Bestandteilen nach Anspruch 1 auf 800 bis 1200 °C und Streckreduzierwalzen desselben mit einer Querschnittsreduktionsrate im Bereich von 40 bis 80 %.

**Revendications**

1. Tuyau en acier soudé par résistance électrique de calibre épais de résistance élevée d'excellentes aptitude au durcissement, aptitude à l'usinage à chaud, et résistance à la fatigue contenant, en % en masse,
   C : 0,25 à 0,4 %,
   Si : 0,01 à 0,50 %,
   Mn : 0,8 à 1,5 %,
   P : 0,05 % ou inférieur,
   S : 0,05 % ou inférieur,
   Al : 0,05 % ou inférieur,
   Ti : 0,005 à 0,02 %,
   B : 0,0005 à 0,0020 %,
   N : 0,001 à moins de 0,004 %,
   Ca : 0,0002 à 0,005 %, et éventuellement un ou plusieurs choisis dans le groupe de
   Cr : 0,1 à 1 %,
   Mo : 0,05 à 1 %,
   V : 0,01 à 0,5 %,
   Ni : 0,1 à 1 %, et
   Nb : 0,01 à 0,1 %,
   avec un reste de Fe et d'impuretés inévitables, présentant une vitesse de refroidissement critique Vc exprimée par l'équation <1> inférieure à 30 deg. C/s, et ayant un rapport d'épaisseur t et de diamètre extérieur D, t/D, dans un intervalle de plus de 0,15 à 0,30 :

$$LogVc = 2,94 - 0,75\beta \qquad <1>$$

où $\beta$ = 2,7 C + 0,4 Si + Mn + 0,45 Ni + 0,8 Cr + 2 Mo.

2. Procédé de production d'un tuyau en acier soudé par résistance électrique de calibre épais de résistance élevée d'excellentes aptitude au durcissement, aptitude à l'usinage à chaud, et résistance à la fatigue, **caractérisé par** le chauffage d'un tuyau en acier soudé par résistance électrique mère présentant les ingrédients comme donnés dans la revendication 1 à de 800 à 1 200°C et le laminage de réduction par étirage de celui-ci par un taux de réduction transversal dans un intervalle de 40 à 80 %.

# Fig.1

650

- ◆ AFTER WATER COOLING
- ▲ AFTER WATER COOLING-
  300°C ANNEALING
- × AFTER WATER COOLING-
  350°C ANNEALING

100% M HARDNESS

600

HV9.8N

550

90% M HARDNESS

500

450

400

0.2    0.25    0.3    0.35    0.4

AMOUNT OF C (MASS%)

# Fig.2

80

70

850°C

REDUCTION OF AREA (%)

60

LOWER LIMIT WHERE HOT
FORMING IS EASY

50

PREFERABLE RANGE

40

LOWER LIMIT ENABLING HOT FORMING

30

RANGE OF PRESENT
INVENTION

20

10

0

0    0.002    0.004    0.006    0.008    0.01    0.012

AMOUNT OF N (MASS%)

# Fig.3

65.5°

FATIGUE
TEST PIECE

BEARINGS

LOAD SIDE

FIXED SIDE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002070767 A
- JP 2004011009 A
- JP 2004009126 A
- JP 2003201543 A
- JP 2004292922 A
- JP 2005076047 A
- JP 3653871 B
- JP 2004353028 A
- JP 2005139517 A

**Non-patent literature cited in the description**

- *Tetsu to Hagane,* 1988, vol. 74, 1073
- *Bane Ronbunshu (Springs Papers),* 1983, vol. 28, 46